# EUROPÄISCHE PATENTSCHRIFT

(11) **EP 3 782 425 B1**
(45) Veröffentlichungstag und Bekanntmachung des Hinweises auf die Patenterteilung: **18.06.2025**
(21) Anmeldenummer: 19715463.6
(22) Anmeldetag: 02.04.2019
(51) Int. Cl.: H04W 74/0816

(54) **ERSTES UND ZWEITES ENDGERÄT EINES FUNKNETZWERKS UND VERFAHREN ZUM BETREIBEN DES ERSTEN UND ZWEITEN ENDGERÄTS**
FIRST AND SECOND TERMINAL OF A RADIO NETWORK AND METHOD FOR OPERATING SAID FIRST AND SECOND TERMINAL
PREMIER ET SECOND TERMINAL D'UN RÉSEAU RADIO ET PROCÉDÉ POUR FAIRE FONCTIONNER LE PREMIER ET LE SECOND TERMINAL

(30) Priorität: 17.04.2018 DE 102018205779
(43) Veröffentlichungstag der Anmeldung: 24.02.2021
(73) Patentinhaber: Robert Bosch GmbH, 70442 Stuttgart (DE)
(72) Erfinder: SAMBALE, Klaus, 46047 Oberhausen (DE)
(86) Internationale Anmeldenummer: PCT/EP2019/058253
(87) Internationale Veröffentlichungsnummer: WO 2019/201585

(56) Entgegenhaltungen:
- EP-A1- 2 288 190
- US-A1- 2004 071 154
- US-A1- 2009 122 738

## Beschreibung

### Stand der Technik

Die Erfindung betrifft ein erstes und ein zweites Endgerät eines Drahtlosnetzwerks sowie Verfahren zum Betreiben des ersten und des zweiten Endgeräts.

Gemäß einem CSMA / CA-Protokoll (Carrier Sense Multiple Access / Collision Avoidance) wird auf einen Funkkanal nur dann zugegriffen, wenn dieser vorher als frei identifiziert wurde. Dieses Verfahren wird beispielsweise für IEEE 802.11p eingesetzt, welches eine fahrzeugspezifische Anpassung von IEEE 802.11 betrifft.

EP 2 288 190 A1 offenbart einen Netzwerkknoten eines Ad-hoc-Netzwerks für Kraftfahrzeuge. In einem Fahrzeug-Ad-hoc-Netzwerk (VANET) ist ein Sender-Empfänger-Knoten in einem Fahrzeug angeordnet. Der Knoten beinhaltet einen Protokollstapel, der eine Anwendungsschicht, eine Verbindungsschicht und eine zwischen der Anwendungsschicht und der Verbindungsschicht angeordnete Staukontrollschicht beinhaltet. Die Staukontrollschicht überträgt kurze Nachrichten zwischen der Anwendungsschicht und der Verbindungsschicht. Die Kurznachrichten werden nach einem Standard für das VANET definiert, und die Stauregelungsschicht optimiert eine netzwerkweite Tarifzuordnung für die Kurznachrichten.

US 2009/0122738 A1 offenbart ein Verfahren zum Verteilen eines Pakets an eine Vielzahl von beweglichen Knoten. Das Verfahren umfasst das Empfangen eines Pakets, das mindestens eine Nachricht, eine Senderkennung, einen Standort eines Senders, eine Kennung für einen Relaisknoten und eine Entfernung vom Sender und dem Relaisknoten enthält, das Bestimmen, ob ein das Paket empfangender Knoten der Relaisknoten ist, und das sofortige Verteilen des Pakets an eine Vielzahl von beweglichen Knoten, wenn der Empfangsknoten der Relaisknoten ist. Wenn der Empfangsknoten nicht der Relaisknoten ist, umfasst das Verfahren ferner die Schritte Warten einer festgelegten Zeitspanne, Bestimmen, ob ein Paket von einem anderen Sender empfangen wird, der die gleiche Nachricht enthält, innerhalb der Zeitspanne und Verteilen des Pakets auf eine Vielzahl von beweglichen Knoten, wenn ein Paket, das die gleiche Nachricht enthält, nicht innerhalb der Zeitspanne empfangen wird. Das verteilte Paket beinhaltet einen Identifikator für einen nachfolgenden Relay-Knoten.

US 2004/0071154 A1 offenbart eine Technik, die es einem gemeinsamen Kommunikationsmedium ermöglicht, unter verlustbehafteten Bedingungen eine höhere Datenrate bei gleichzeitig geringer Latenz zu erreichen.

### Offenbarung der Erfindung

Gemäß einem ersten Aspekt wird ein erstes fahrzeugseitiges Endgerät zur Funkkommunikation in einem Funknetzwerk gemäß Anspruch 1 bereitgestellt..

Vorteilhaft wird so ein Ausbleiben einer Folgekommunikation nach Ablauf der ersten Zeitdauer durch ein zweites Endgerät dahingehend interpretiert, als dass die ersten Daten nicht korrekt empfangen wurden. Folglich wird die bereits erfolgte Kanalzugriffsprozedur dazu genutzt, um einen erneuten Versand der ersten Daten nach Ablauf der zweiten Zeitdauer, welche größer ist als die erste Zeitdauer, zu starten. Damit wird ein erneutes Ausführen einer Kanalzugriffsprozedur verhindert. Im Falle einer Folgekommunikation ausgehend von dem zweiten Endgerät unterbleibt ein erneutes Versenden der ersten Daten durch das erste Endgerät. Folglich wird ein erneutes Ausführen der Kanalzugriffsprozedur verhindert und damit die spektrale Effizienz erhöht.

Eine vorteilhafte Ausführungsform zeichnet sich dadurch aus, dass die Kanalzugriffsprozedur vor einem Kanalzugriff, welcher den Versand der ersten Daten umfasst, prüft, ob der Funkkanal eine Überwachungszeitdauer lang frei ist, eine zufällig gewählte Backoff-Zahl für jeden als frei erkannten Zeitschlitz des Funkkanals dekrementiert, und die ersten Daten erstmalig dann verwendet, wenn die Backoff-Zahl einen Schwellwert von beispielsweise Null erreicht und der Funkkanal frei ist.

Durch dieses CSMA-CA-Verfahren (Carrier Sense Multiple Access/Collision Avoidance) wird kollidierenden Kanalzugriffen vorgebeugt. Durch das Abwarten der ersten Zeitdauer und das anschließende Prüfen, ob der Funkkanal frei ist, wird die zuvor ausgeführte Kanalzugriffsprozedur nicht erneut ausgeführt, bevor der erneute Versand der ersten Daten erfolgt.

Eine vorteilhafte Ausführungsform zeichnet sich dadurch aus, dass die erste Zeitdauer (SIFS; PIFS) ein Short Interframe Space oder ein PCF Interframe Space ist.

Vorteilhaft wird die erste Zeitdauer so kurz gewählt, dass kein anderes Endgerät als das zweite Endgerät, welches zur Kommunikation nach dem ersten Endgerät folgt, den Funkkanal erfolgreich arbitrieren kann.

Eine vorteilhafte Ausführungsform zeichnet sich dadurch aus, dass die zweite Zeitdauer (PIFS; DIFS) ein PCF Interframe Space oder ein DCF Interframe Space ist.

Vorteilhaft ist die zweite Zeitdauer so kurz gewählt, dass das erste Endgerät noch eine fehlerhafte Übertragung der ersten Daten feststellen kann und noch vor dem erfolgreichen Funkkanalzugriff durch ein anderes Endgerät die ersten Daten erneut versenden kann.

Ein zweiter Aspekt dieser Beschreibung betrifft ein Verfahren zum Betreiben eines ersten fahrzeugseitigen Endgeräts eines Funknetzwerks gemäß Anspruch 5.

Ein dritter Aspekt dieser Beschreibung betrifft ein zweites fahrzeugseitiges Endgerät zur Funkkommunikation in einem Funknetzwerk gemäß Anspruch 6.

Der Erfindung nach ist der verwendete Funkkanal ein dedizierter Funkkanal, der exklusiv zur Übertragung von aufeinanderfolgenden Paketen gemäß einem Packet Train reserviert ist, wobei der Packet Train eine Anzahl von zeitlich nicht unmittelbar aufeinanderfolgenden Daten umfasst, welche von unterschiedlichen Endgeräten stammen und für die nur das erste der teilnehmenden Endgeräte eine Kanalzugriffsprozedur durchführt, wobei die ersten Daten und deren erneute Übertragung Teil des Packet Trains sind. Vorteilhaft wird einmalig eine Kanalzugriffsprozedur seitens des ersten Endgeräts durchgeführt, die ersten Daten werden versendet und alle nachfolgenden Transmissionen bzw. Übertragungen zweiter Daten im Sinne eines Packet Train kommen vorteilhaft ohne eine weitere Kanalzugriffsprozedur aus. Die zweiten Daten des Packet Train stammen dabei von einem jeweiligen Endgerät. Die weiteren Transmissionen hängen alle von der ersten erfolgreichen Kanalzugriffsprozedur ab. Folglich werden mittels einer einzigen Zugriffsprozedur Daten von unterschiedlichen Endgeräten versendet, womit die Latenz zum Datenversand für eine Multi-Hop-Kommunikation stark reduziert wird. Insgesamt wird folglich die spektrale Effizienz verbessert.

Die zweiten Daten haben zwei Funktionen: Zum einen bilden sie ein ACK für den Empfang der ersten Daten, so dass das erste Endgerät eine Bestätigung des Empfangs der ersten Daten durch das zweite Endgerät erhält. Zum anderen enthalten die zweiten Daten Informationen für das dritte Endgerät.

Eine vorteilhafte Ausführungsform zeichnet sich dadurch aus, dass die zweiten Daten in Abhängigkeit von den ersten Daten ermittelt werden.

Eine vorteilhafte Ausführungsform zeichnet sich dadurch aus, dass die Zeitdauer ein Short Interframe Space oder ein PCF Interframe Space ist.

Vorteilhaft wird die Zeitdauer so kurz gewählt, dass kein anderes Endgerät den Funkkanal erfolgreich arbitrieren kann.

Eine vorteilhafte Ausführungsform zeichnet sich dadurch aus, dass das zweite Endgerät dazu ausgebildet ist, nach dem Ende des Versands der zweiten Daten eine weitere Zeitdauer abzuwarten, nach Ablauf der weiteren Zeitdauer zu überprüfen, ob der Funkkanal belegt ist, und die zweiten Daten nach Ablauf einer zusätzlichen Zeitdauer nach dem Ende des zuvor erfolgten Versands der zweiten Daten erneut über den Funkkanal zu versenden, wenn der Funkkanal nach Ablauf der zusätzlichen Zeitdauer nicht belegt ist.

Vorteilhaft wird so ein Ausbleiben einer Folgekommunikation durch ein drittes Endgerät nach Ablauf der weiteren Zeitdauer dahingehend interpretiert, als dass die zweiten Daten nicht korrekt empfangen wurden. Folglich wird die bereits erfolgte Kanalzugriffsprozedur auf der Seite des ersten Endgeräts dazu genutzt, um einen erneuten Versand der zweiten Daten nach Ablauf einer zusätzlichen Zeitdauer zu starten. Damit wird ein erneutes Ausführen einer Kanalzugriffsprozedur verhindert. Im Falle einer Folgekommunikation ausgehend von dem dritten Endgerät unterbleibt ein erneutes Versenden der zweiten Daten durch das zweite Endgerät. Folglich wird ein erneutes Ausführen der Kanalzugriffsprozedur verhindert und damit die spektrale Effizienz erhöht.

Weitergehend wird erreicht, dass alle Endgeräte in der festgelegten Abfolge mit den nötigen Informationen versorgt werden. Im Falle eines Fehlers kann das betroffene Endgerät umgehend Maßnahmen einleiten, um die Betriebssicherheit des Fahrzeugs zu gewährleisten (beispielsweise eine Notbremsung oder ein Einhalten eines neuen Mindestabstands zum Vorderfahrzeug).

Ein vierter Aspekt dieser Beschreibung betrifft ein Verfahren zum Betreiben eines zweiten fahrzeugseitigen Endgeräts eines Funknetzwerks gemäß Anspruch 10.

Weitere Merkmale und Vorteile sind der nachfolgenden Beschreibung und den Figuren der Zeichnung entnehmbar. In den Figuren zeigen:
- Figur 1: eine schematische perspektivische Ansicht einer beispielhaften Verkehrssituation;
- Figur 2: ein schematisches Ablaufdiagramm; und
- Figuren 3-6: jeweils ein schematisches Kanaldiagramm.

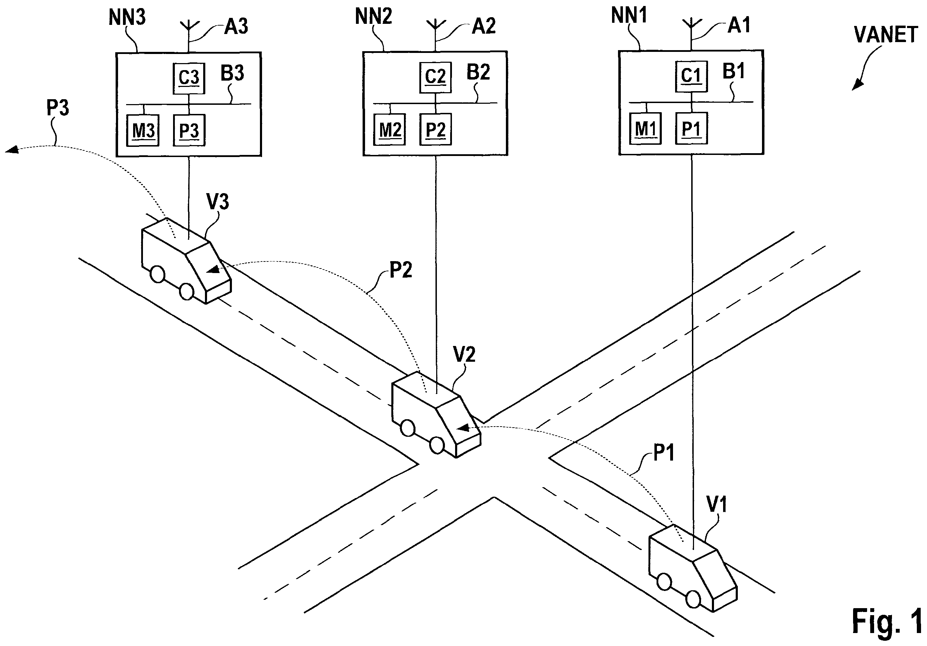

Figur 1 zeigt eine schematische perspektivische Ansicht einer beispielhaften Verkehrssituation. Jedes Fahrzeug V1, V2, V3 umfasst ein Endgerät NN1, NN2, NN3, welche gemeinsam ein Adhoc-Funkkommunikationsnetzwerk VANET bilden. Selbstverständlich können auch andere insbesondere ortsfeste Infrastruktureinheiten wie beispielsweise Verkehrsampeln ein Endgerät im Sinne eines der Endgeräte NN1 bis NN3 umfassen.

Jedes der Endgeräte NN1, NN2, NN3 umfasst einen Datenbus B1, B2, B3, welcher wenigstens einen Prozessor P1, P2, P3, einen Speicher M1, M2, M3 und ein Funkmodul C1, C2, C3 miteinander verbindet. An das Funkmodul C1, C2, C3 ist wenigstens eine Antenne A1, A2, A3 angeschlossen. Das jeweilige Funkmodul C1, C2, C3 ist zum Senden und Empfangen von Funksignalen gemäß dem Adhoc-Funkkommunikationsnetz VANET über die Antenne A1, A2, A3 konfiguriert. Auf dem Speicher M1, M2, M3 ist ein Computerprogramm im Sinne eines Computerprogrammprodukts abgelegt. Das Computerprogramm ist dazu ausgebildet, um insbesondere mit Hilfe des wenigstens einen Prozessors P1, P2, P3, des wenigstens einen Speichers M1, M2, M3 und des wenigstens einen Funkmoduls C1, C2, C3, die in dieser Beschreibung dargelegten Verfahrensschritte ausführen und über die wenigstens eine Antenne A1, A2, A3 mit weiteren Endgeräten zu kommunizieren. Alternativ oder zusätzlich sind die Prozessoren P1, P2, P3 als ASIC implementiert, um die beschriebenen Verfahrensschritte auszuführen.

Das Netzwerk VANET stellt zumindest einen Adhoc-Funkkanal im Sinne von Radio-Ressourcen bzw. Funkbetriebsmittel bereit. Jedes der Endgeräte NN1, NN2, NN3 ist beispielsweise gemäß dem Standard IEEE 802.11p, insbesondere IEEE 802.11p-2010 vom 15. Juli 2010, konfiguriert, der durch Bezugnahme in diese Beschreibung aufgenommen ist. Die IEEE 802.11p PHY- und MAC-Funktionen stellen Dienste für Protokolle der oberen Schicht für dedizierte Kurzstrecken-Kommunikation, DSRC, in den USA und für kooperative ITS, C-ITS, in Europa bereit. Die Endgeräte NN1, NN2, NN3 kommunizieren über den Adhoc-Funkkanal im nicht lizenzierten Frequenzbereich direkt miteinander. Auf den Adhoc-Funkkanal wird mittels eines CSMA / CA-Protokolls (Carrier Sense Multiple Access / Collision Avoidance) durch die Funkmodule C1, C2, C3 zugegriffen. Der Adhoc-Funkkanal und das Adhoc-Funkkommunikationsnetz VANET sind beispielsweise durch den IEEE-Standard "802.11p-2010 - IEEE Standard for Information Technology - Local and Metropolitan Area Networks-" Specific Part 11: Wireless LAN Medium Access Control (MAC) and Physical Layer (PHY) Specifications Amendment 6: Wireless Access in Vehicular Environments" spezifiziert, der durch Bezugnahme aufgenommen ist. IEEE 802.11p ist ein Standard zur Erweiterung des WLAN-Standards IEEE 802.11. Das Ziel von IEEE 802.11p ist es, Funktechnologie in Personenkraftwagen zu etablieren und eine zuverlässige Schnittstelle für Intelligent Transport Systems (ITS)-Anwendungen bereitzustellen. IEEE 802.11p ist auch die Basis für Dedicated Short Range Communication (DSRC) im Bereich von 5,85 bis 5,925 GHz.

Um auf den Adhoc-Funkkanal zuzugreifen, wenden die Endgeräte NN1, NN2 und NN3 ein Listen-Before-Talk-Verfahren an. Das LBT umfasst eine Backoff-Prozedur, welche vor dem Senden auf dem Adhoc-Funkkanal dessen Belegung prüft. Zuerst hört das Endgerät NN1, NN2, NN3 den Funkkanal ab und wartet, bis der Adhoc-Funkkanal AHCH nach Ablauf einer Zeitdauer DIFS, welche als Arbitrierungszwischenzeitraum bezeichnet wird, frei ist. Der Adhoc-Funkkanal AHCH wird als frei gewertet, wenn ein Leistungspegel niedriger als ein Schwellenwert ist, und keine Adhoc-Präambel mit einem Leistungspegel größer als ein zweiter Schwellenwert ermittelt wird. Der Adhoc-Funkkanal ist besetzt, wenn der Kanal als nicht frei erkannt wird.

Wenn der Adhoc-Funkkanal während der Zeitdauer DIFS als frei erkannt wird, beginnt die Backoff-Prozedur. Das Endgerät NN1, NN2, NN3 erhält eine Übertragungsgelegenheit TXOP, wenn ein Backoff-Zähler abläuft. Wenn das Endgerät NN1, NN2, NN3 den Adhoc-Funkkanal als frei erkennt, wird es Daten übertragen, soweit eine TXOP-Dauer der Übertragungsgelegenheit nicht abgelaufen ist.

Das Dokument "ETSI EN 302 663 V1.2.0 (2012-11)", das hierin durch Bezugnahme aufgenommen ist, beschreibt die beiden untersten Schichten der ITS-G5-Technologie (ITS G5: Intelligente Transportsysteme, die im 5 GHz-Frequenzband arbeiten), die physikalische Schicht und die Datensicherungsschicht. Die Funkmodule C1, C2, C3 realisieren beispielsweise diese beiden untersten Schichten und entsprechende Funktionen gemäß "ETSI TS 102 687 V1.1.1 (2011-07)", um den Adhoc-Funkkanal zu verwenden. Für die Nutzung des Adhoc-Funkkanals, der Teil des nicht lizenzierten Frequenzbandes NLFB ist, stehen in Europa folgende nicht lizenzierte Frequenzbänder zur Verfügung: 1) ITS-G5A für sicherheitsrelevante Anwendungen im Frequenzbereich 5,875 GHz bis 5,905 GHz; 2) ITS-G5B für nicht sicherheitsrelevante Anwendungen im Frequenzbereich 5.855 GHz bis 5.875 GHz; und 3) ITS-G5D für den Betrieb von ITS-Anwendungen im Frequenzbereich 5,055 GHz bis 5,925 GHz. ITS-G5 ermöglicht die Kommunikation zwischen den Endgeräten NN1, NN2, NN3 außerhalb des Kontexts einer Basisstation. Der Standard ITS-G5 ermöglicht den sofortigen Austausch von Datenrahmen und vermeidet den Aufwand, der beim Aufbau eines zellbasierten Netzwerkes benötigt wird.

Das Dokument "ETSI TS 102 687 V1.1.1 (2011-07)", das hier durch Bezugnahme aufgenommen wird, beschreibt für ITS-G5 einen "Decentralized Congestion Control Mechanism". Der Adhoc-Funkkanal dient unter anderem dazu, Verkehrssicherheits- und Verkehrseffizienzdaten auszutauschen. Die Funkmodule C1, C2, C3 realisieren beispielsweise die Funktionen, wie sie im Dokument "ETSI TS 102 687 V1.1.1 (2011-07)" beschrieben sind. Die Anwendungen und Dienste von ITS-G5 basieren auf dem kooperativen Verhalten der straßenseitigen Endgeräte NN1, NN2, NN3, die das Adhoc-Netzwerk VANET bilden (VANET: Vehicle Adhoc Network). Das Adhoc-Netzwerk VANET ermöglicht zeitkritische Anwendungen im Straßenverkehr, die einen schnellen Informationsaustausch erfordern, um den Fahrer und / oder das Fahrzeug rechtzeitig zu alarmieren und zu unterstützen. Um das reibungslose Funktionieren des Adhoc-Netzwerkes VANET zu gewährleisten, wird für den Adhoc-Funkkanal von ITS-G5 "Decentral Congestion Control" (DCC) verwendet. DCC verfügt über Funktionen, die sich auf mehreren Schichten der ITS-Architektur befinden. Die DCC-Mechanismen basieren auf Wissen über den Funkkanal. Die Kanalzustandsinformation wird durch Kanalsondierung erhalten. Kanalzustandsinformationen können durch die Verfahren TPC (Sendeleistungssteuerung), TRC (Sendungsratensteuerung) und TDC (Sendedatenratensteuerung) erhalten werden. Die Verfahren bestimmen die Kanalzustandsinformation als Antwort auf empfangene Signalpegelschwellwerte oder Präambelinformationen von erkannten Paketen.

In der gezeigten Verkehrssituation fährt das erste Fahrzeug V1 vor dem zweiten Fahrzeug V2 und das zweite Fahrzeug V2 fährt vor dem dritten Fahrzeug V3. Um beispielsweise Auffahrunfälle zu vermeiden, übermittelt das erste Fahrzeug V1 seinen aktuell ermittelten Bremsweg und übermittelt diesen mittels der ersten Daten P1 an das zweite Fahrzeug V2. In Abhängigkeit von den empfangenen Daten P1 passt das zweite Fahrzeug V2 seinen Abstand zum ersten Fahrzeug V1 an. Das zweite Fahrzeug V2 ermittelt den eigenen Bremsweg in Abhängigkeit von den empfangenen ersten Daten P1, beispielsweise in Abhängigkeit von dem Bremsweg des Fahrzeugs V1, und übermittelt den ermittelten Bremsweg mittels Daten P2 an das dritte Fahrzeug V3. Das Fahrzeug V3 ermittelt analog zum Fahrzeug V2 Daten P3 in Abhängigkeit von den empfangenen Daten P2 und gibt den eigenen Bremsweg mittels der Daten P3 an nachfolgende Fahrzeuge weiter.

In einem weiteren Beispiel erkennt das erste Fahrzeug V1 ein Hindernis in einem Abstand vor sich und leitet eine Bremsung ein. Die Informationen über das Hindernis wie beispielsweise die Position und/oder die Information, dass eine Notbremsung eingeleitet wurde, werden mittels der Daten P1 an das nachfolgende Fahrzeug V2 übermittelt. Das Fahrzeug V2 gibt die mittels der Daten P1 empfangenen Informationen unverändert mittels der Daten P2 an das dritte Fahrzeug V3 weiter.

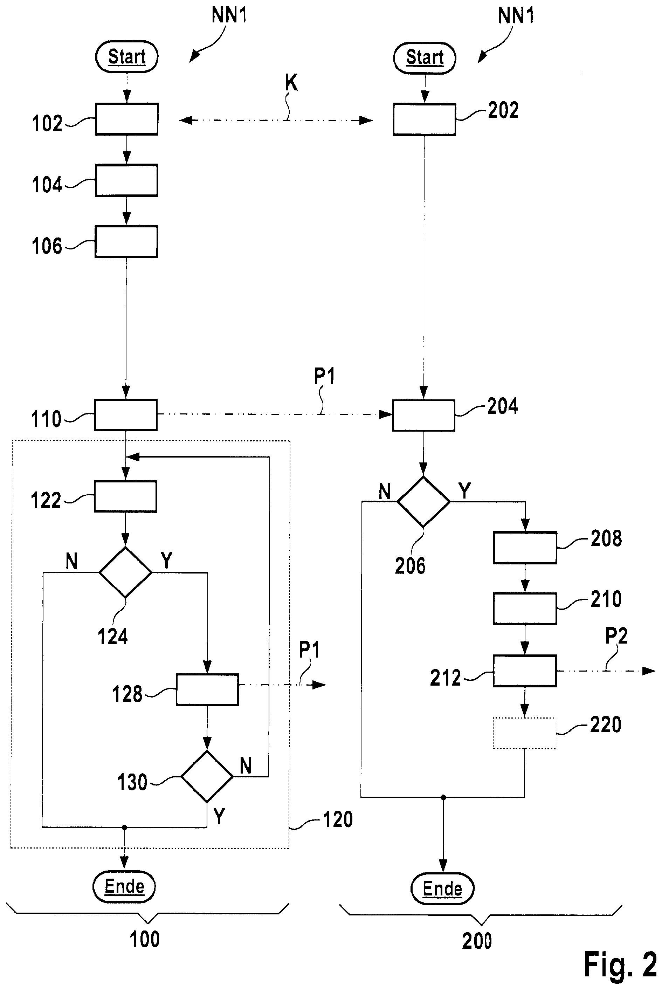

Figur 2 zeigt ein schematisches Ablaufdiagramm zum Betreiben des ersten Endgeräts NN1 und des zweiten Endgeräts NN2 aus Figur 1. Ein Ablauf 100 ist hierbei zum Betreiben des ersten Endgeräts NN1 vorgesehen. Ein Ablauf 200 ist zum Betreiben des zweiten Endgeräts NN2 bzw. weiterer Endgeräte vorgesehen.

Das erste Endgerät NN1 und das zweite Endgerät NN2 ermitteln in einem jeweiligen Schritt 102 bzw. 202 die Abfolge von zu versendenden Daten P1, P2 im Sinne von Datenpaketen. Diese Abfolge ist beispielsweise fest vorkonfiguriert. In einem anderen Beispiel findet jedoch vorab eine Kommunikation K statt, um die Abfolge des Datenversands festzulegen. Beispielsweise werden von den Endgeräten NN1 und NN2 CAM-Nachrichten bzw. DENM-Nachrichten ausgetauscht, welche eine Position und Fahrtrichtung des jeweiligen Fahrzeugs V1, V2 aus Figur 1 indizieren. So kann beispielsweise durch Position und Fahrtrichtung jedes Fahrzeug V1, V 2, V3 aus Figur 1 feststellen, in welcher Reihenfolge die Fahrzeuge V1, V2, V3 in Fahrtrichtung fahren. Entsprechend der Fahrtreihenfolge der Fahrzeuge V1, V2, V3 wird beispielsweise die Abfolge von zu versendenden Daten in den Schritten 102, 202 vom jeweiligen Endgerät NN1, NN2 festgelegt. Diese Abfolge kann in Fahrtrichtung oder gegen die Fahrtrichtung erfolgen und ist beispielsweise vom Anwendungsfall abhängig. So ist für ein koordiniertes Bremsen eine zeitliche Abfolge entgegen der Fahrtrichtung sinnvoll. Für ein koordiniertes Anfahren kann eine zeitliche Abfolge entgegen in Fahrtrichtung sinnvoll sein.

In einem Schritt 104 werden erste Daten P1 ermittelt. Im Schritt 106 wird eine Backoff-Prozedur gestartet und eine Zeitdauer DIFS abgewartet. Das Endgerät NN1 bestimmt anschließend insbesondere nach einem Zufallsprinzip einen Wert für eine Backoff-Zahl bzw. einen Backoff-Zähler. Wenn nach einer Übertragung irgendeines Endgeräts das Medium für die Zeitdauer DIFS als frei erkannt wird, wird begonnen, die Backoff-Zahl pro Slot-Zeitdauer, die auf die Zeitdauer DIFS folgt und für die der Kanal weiterhin als frei erkannt wird, um jeweils Eins zu dekrementieren. Wenn die Backoff-Zahl den Wert Null erreicht und der Kanal frei ist, darf das Endgerät auf den Funkkanal zugreifen. Nach der Freigabe des Funkkanalzugriffs, wird in einen Schritt 110 gewechselt, um die ermittelten Daten P1 auf dem Funkkanal zu versenden.

Der verwendete Funkkanal ist in einem Beispiel ein dedizierter Funkkanal, der exklusiv zur Übertragung von aufeinanderfolgenden Paketen gemäß einem Packet Train reserviert ist. Ein Packet Train umfasst eine Anzahl von zeitlich nicht unmittelbar aufeinanderfolgenden Daten, welche von unterschiedlichen Endgeräten stammen und für die nur das erste der teilnehmenden Endgeräte eine Kanalzugriffsprozedur durchgeführt hat. Alternativ oder zusätzlich umfassen die Daten P1, P2 ein Flag, welches diese Packet Train-Kommunikation anzeigt. In einem weiteren Beispiel wird das Vorliegen einer Packet Train-Kommunikation aus den empfangenen oder zu übertragenden Daten abgeleitet.

Das zweite Endgerät NN2 ist in einem Schritt 204 auf Empfang geschaltet. Werden die Daten P1 im Schritt 204 erfolgreich empfangen, so wird gemäß einem Schritt 206 in einen Schritt 208 gewechselt. Im Schritt 206 wird zum einen überprüft, ob die ersten Daten P1 korrekt empfangen wurden. Zusätzlich wird überprüft, ob die empfangenen Daten P1 von dem ersten Endgerät NN1 stammen. Hierzu wird beispielsweise eine Kennung des ersten Endgeräts NN1 verwendet, welche im Schritt 202 ermittelt wurde. Diese Kennung identifiziert das erste Endgerät NN1 als Vorgänger für den Versand der zweiten Daten P2. Das bedeutet, dass das zweite Endgerät NN2 zunächst die ersten Daten P1 von dem ersten Endgerät NN1 empfangen muss, um die zweiten Daten P2 versenden zu dürfen.

Im Schritt 208 ermittelt das zweite Endgerät NN2 die zweiten Daten P2 zum Versand. Die zweiten Daten P2 werden beispielhaft in Abhängigkeit von den empfangenen Daten P1 ermittelt. Alternativ werden die Daten P2 nicht in Abhängigkeit von den Daten P1 ermittelt. Allerdings werden die zweiten Daten P2 in Abhängigkeit vom Empfang der Daten P1 versendet.

In einem Schritt 210 wird eine Zeitdauer SIFS bzw. PIFS nach dem Ende des Empfangs der ersten Daten P1 aus dem Schritt 204 abgewartet. Ist die Zeitdauer SIFS bzw. PIFS abgelaufen, so wird in einem Schritt 212 der Versand der zweiten Daten P2 gestartet.

Ein nach dem Schritt 212 folgender Schritt 220 entspricht einem Schritt 120, welcher von dem ersten Endgerät NN1 ausgeführt wird. Der Schritt 120 folgt im Ablauf 100 nach dem Schritt 110 und damit nach dem erstmaligen Versand der ersten Daten P1 über den Funkkanal.

Nach dem Ende des Versands der ersten Daten P1 wird gemäß einem Schritt 122 eine erste Zeitdauer SIFS bzw. PIFS abgewartet. Nach Ablauf dieser ersten Zeitdauer wird in einem Schritt 124 überprüft, ob der Funkkanal in einem Überwachungszeitraum zwischen einem Ablauf der ersten Zeitdauer SIFS bzw. PIFS und dem Ablauf einer zweiten Zeitdauer PIFS bzw. DIFS, welche nach dem Ende des Versand der ersten Daten P1 beginnt, frei ist. Ist dies der Fall, so beginnt das erste Endgerät NN1 in einem Schritt 128 damit, die ersten Daten P1 erneut zu versenden. In einem Schritt 130 wird überprüft, ob die maximale Anzahl von Sendeversuchen erreicht ist. Ist dies der Fall, so wird das Verfahren beendet. Ist dies nicht der Fall, so wird in den Schritt 122 gewechselt, um, falls erforderlich, einen weiteren Sendeversuch zu starten.

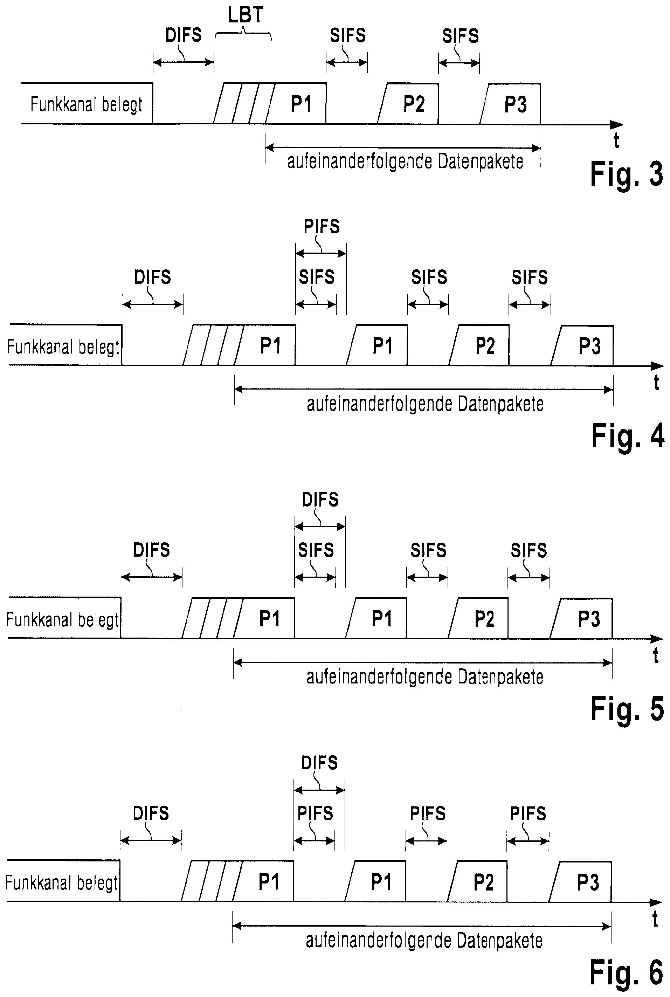

Figur 3 zeigt ein schematisches Kanaldiagramm. Es ist der Versand der ersten bis dritten Daten P1 bis P3 gezeigt, wobei lediglich das erste Endgerät NN1 die Zeitdauer DIFS abwartet, um anschließend einmalig die Prozedur LBT (Listen-Before-Talk) gemäß den Schritten 108 und 110 aus Figur 2 auszuführen. Die einmalige Ausführung der Prozedur LBT reicht also aus, dass die jeweiligen Daten P1, P2, P3 von einem jeweiligen Endgerät NN1, NN2 und NN3 aus Figur 1 über den Funkkanal versendet werden, wobei die Endgeräte NN2 und NN3 für den Versand der Daten P2 und P3 keine jeweilige LBT-Prozedur durchführen müssen.

Das zweite Endgerät NN2 wartet die Zeitdauer SIFS nach dem Ende der Übertragung der ersten Daten P1 ab, um unmittelbar nach dem Ende der Zeitdauer SIFS die zweiten Daten P2 über den Funkkanal zu versenden. Analog verfährt das dritte Endgerät NN3 zum Versand der dritten Daten P3.

Figur 4 zeigt ein schematisches Kanaldiagramm. Im Unterschied zu Figur 3 bleibt ein Versand der zweiten Daten P2 nach dem Ende der Zeitdauer SIFS, welche mit dem Ende des erstmaligen Versands der ersten Daten P1 beginnt, aus. Dies stellt das erste Endgerät NN1 fest, um nach einem Ende der Zeitdauer PIFS, welche mit dem Ende des erstmaligen Versands der ersten Daten P1 beginnt, unmittelbar mit einem erneuten Versenden der ersten Daten P1 zu beginnen. Im Anschluss an den erneuten Versand der ersten Daten P1 beginnt das zweite Endgerät NN2 nach dem Ende der Zeitdauer SIFS mit dem Versand der zweiten Daten P2.

Figur 5 zeigt ein schematisches Kanaldiagramm. Im Unterschied zu Figur 4 wird anstatt der Zeitdauer PIFS die Zeitdauer DIFS dazu verwendet, um einen erneuten Versand der ersten Daten P1 zu beginnen.

Figur 6 zeigt ein schematisches Kanaldiagramm. Im Unterschied zur Figur 5 wird anstatt der Zeitdauer SIFS die Zeitdauer PIFS dazu verwendet, um zum einen eine jeweils nachfolgende Datenübertragung der Daten P2, P3 zu beginnen und zum anderen nach Ablauf der Zeitdauer PIFS zu überprüfen, ob eine nachfolgende Datenübertragung durch ein Endgerät wie beispielsweise P2 erfolgt oder nicht.

Die Zeitdauer SIFS ist ein Short Interframe Space. Die Zeitdauer PIFS ist ein PCF Interframe Space, wobei PCF für Point coordination function steht. Die Zeitdauer DIFS ist ein DCF Interframe Space, wobei DCF für Distribution Coordination Function steht.

## Patentansprüche

1. Ein erstes fahrzeugseitiges Endgerät (NN1) zur Funkkommunikation in einem Funknetzwerk, wobei das erste fahrzeugseitige Endgerät (NN1) dazu ausgebildet ist,
erste Daten (P1) zu ermitteln,
eine Kanalzugriffsprozedur für einen Funkkanal durchzuführen,
die ersten Daten (P1) über den Funkkanal zu versenden,
nach dem Ende des Versands der ersten Daten (P1) eine erste Zeitdauer (SIFS; PIFS) abzuwarten,
nach Ablauf der ersten Zeitdauer (SIFS; PIFS) zu überprüfen, ob der Funkkanal belegt ist, und
die ersten Daten (P1) nach Ablauf einer zweiten Zeitdauer (PIFS; DIFS), welche nach dem Ende des zuvor erfolgten Versands der ersten Daten (P1) beginnt und welche größer ist als die erste Zeitdauer (SIFS; PIFS), erneut über den Funkkanal zu versenden, wenn der Funkkanal nach Ablauf der ersten Zeitdauer nicht belegt ist,
**dadurch gekennzeichnet, dass** der verwendete Funkkanal ein dedizierter Funkkanal ist, der exklusiv zur Übertragung von aufeinanderfolgenden Paketen gemäß einem Packet Train reserviert ist, wobei der Packet Train eine Anzahl von zeitlich nicht unmittelbar aufeinanderfolgenden Daten (P1; P2) umfasst, welche von unterschiedlichen Endgeräten (NN1; NN2) stammen und für die nur das erste der teilnehmenden Endgeräte (NN1) eine Kanalzugriffsprozedur durchführt, wobei die ersten Daten (P1) und deren erneute Übertragung Teil des Packet Trains sind.

2. Das erste Endgerät (NN1) nach dem Anspruch 1, wobei die Kanalzugriffsprozedur vor einem Kanalzugriff, welcher den Versand der ersten Daten (P1) umfasst, prüft, ob der Funkkanal eine Überwachungszeitdauer lang (DIFS) frei ist, eine zufällig gewählte Backoff-Zahl für jeden als frei erkannten Zeitschlitz des Funkkanals dekrementiert, und die ersten Daten erstmalig dann versendet, wenn die Backoff-Zahl einen Schwellwert von beispielsweise Null erreicht und der Funkkanal frei ist.

3. Das erste Endgerät (NN1) nach einem der vorstehenden Ansprüche, wobei die erste Zeitdauer (SIFS; PIFS) ein Short Interframe Space und die zweite Zeitdauer (PIFS; DIFS) ein PCF Interframe Space oder ein DCF Interframe Space ist.

4. Das erste Endgerät (NN1) nach einem der Ansprüche 1 oder 2, wobei die erste Zeitdauer (SIFS; PIFS) ein Point coordination function Interframe Space und die zweite Zeitdauer (PIFS; DIFS) ein DCF Interframe Space ist.

5. Ein Verfahren zum Betreiben eines ersten fahrzeugseitigen Endgeräts (NN1) eines Funknetzwerks, wobei das Verfahren umfasst:
Ermitteln von ersten Daten (P1),
Durchführen einer Kanalzugriffsprozedur für einen Funkkanal,
Versenden der ersten Daten (P1) über den Funkkanal,
Abwarten einer ersten Zeitdauer (SIFS; PIFS) nach dem Ende des Versands der ersten Daten (P1),
Überprüfen nach Ablauf der ersten Zeitdauer (SIFS; PIFS), ob der Funkkanal belegt ist, und
erneutes Versenden der ersten Daten (P1) nach Ablauf einer zweiten Zeitdauer (PIFS; DIFS), welche nach dem Ende des zuvor erfolgten Versands der ersten Daten (P1) über den Funkkanal beginnt und welche größer ist als die erste Zeitdauer (SIFS; PIFS), wenn der Funkkanal nach Ablauf der ersten Zeitdauer nicht belegt ist,
**dadurch gekennzeichnet, dass** der verwendete Funkkanal ein dedizierter Funkkanal ist, der exklusiv zur Übertragung von aufeinanderfolgenden Paketen gemäß einem Packet Train reserviert ist, wobei der Packet Train eine Anzahl von zeitlich nicht unmittelbar aufeinanderfolgenden Daten (P1; P2) umfasst, welche von unterschiedlichen Endgeräten (NN1; NN2) stammen und für die nur das erste der teilnehmenden Endgeräte (NN1) eine Kanalzugriffsprozedur durchführt, wobei die ersten Daten (P1) und deren erneute Übertragung Teil des Packet Trains sind.

6. Ein zweites fahrzeugseitiges Endgerät (NN2) zur Funkkommunikation in einem Funknetzwerk, wobei das zweite Endgerät (NN2) dazu ausgebildet ist,
eine Kennung, welche ein erstes fahrzeugseitiges Endgerät (NN1) als Vorgänger für einen Versand von zweiten Daten (P2) identifiziert, zu ermitteln,
erste Daten (P1) über einen Funkkanal von dem ersten Endgerät (NN1), welches die Kennung aufweist, zu empfangen,
zweite Daten (P2) zu ermitteln,
nach dem Ende des Empfangs der ersten Daten (P1) eine Zeitdauer (SIFS; PIFS) abzuwarten, und
die zweiten Daten (P2) ohne eine Kanalzugriffsprozedur über den Funkkanal zu versenden, wenn die Zeitdauer (SIFS; PIFS) abgelaufen ist wobei die ersten Daten (P1) und die zweiten Daten (P2) einen Packet Train bilden, wobei die ersten Daten (P1) und die zweiten Daten (P2) zeitlich nicht unmittelbar aufeinanderfolgende Daten (P1; P2) umfassen, welche von unterschiedlichen Endgeräten (NN1; NN2) stammen und für die nur das erste der teilnehmenden Endgeräte (NN1) eine Kanalzugriffsprozedur durchführt.

7. Das zweite Endgerät (NN2) nach Anspruch 6, wobei die zweiten Daten (P2) in Abhängigkeit von den ersten Daten (P1) ermittelt werden.

8. Das zweite Endgerät (NN2) nach Anspruch 6 oder 7, wobei die Zeitdauer (SIFS; PIFS) ein Short Interframe Space oder ein PCF Interframe Space ist.

9. Das zweite Endgerät (NN2) nach einem der Ansprüche 6 bis 8, wobei das zweite Endgerät (NN2) dazu ausgebildet ist,
nach dem Ende des Versands der zweiten Daten (P2) eine weitere Zeitdauer (SIFS; PIFS) abzuwarten,
nach Ablauf der weiteren Zeitdauer (SIFS; PIFS) zu überprüfen, ob der Funkkanal belegt ist, und
die zweiten Daten (P2) nach Ablauf einer zusätzlichen Zeitdauer (PIFS; DIFS), welche nach dem Ende des zuvor erfolgten Versands der zweiten Daten (P2) beginnt und welche größer ist als die weitere Zeitdauer (SIFS; PIFS), erneut über den Funkkanal zu versenden, wenn der Funkkanal nach Ablauf der zusätzlichen Zeitdauer nicht belegt ist.

10. Ein Verfahren zum Betreiben eines zweiten fahrzeugseitigen Endgeräts (NN2) eines Funknetzwerks, wobei das Verfahren umfasst:
Ermitteln einer Kennung, welche ein erstes fahrzeugseitiges Endgerät (NN1) als Vorgänger für einen Versand von zweiten Daten (P2) identifiziert,
Empfangen von ersten Daten (P1) über einen Funkkanal von dem ersten Endgerät (NN1), welches die Kennung aufweist,
Ermitteln von zweiten Daten (P2),
Abwarten einer Zeitdauer (SIFS; PIFS) nach dem Ende des Empfangs der ersten Daten (P1), und
Versenden der zweiten Daten (P2) über den Funkkanal ohne eine Kanalzugriffsprozedur, wenn die Zeitdauer (SIFS; PIFS) abgelaufen ist wobei die ersten Daten (P1) und die zweiten Daten (P2) einen Packet Train bilden, wobei die ersten Daten (P1) und die zweiten Daten (P2) zeitlich nicht unmittelbar aufeinanderfolgende Daten umfassen, welche von unterschiedlichen Endgeräten (NN1; NN2) stammen und für die nur das erste der teilnehmenden Endgeräte (NN1) eine Kanalzugriffsprozedur durchführt.

## Claims

1. First vehicle-side terminal (NN1) for radio communication in a radio network, wherein the first vehicle-side terminal (NN1) is designed to determine first data (P1),
to perform a channel access procedure for a radio channel,
to send the first data (P1) over the radio channel,
to wait for a first period (SIFS; PIFS) after the first data (P1) have finished being sent,
to check, after the expiry of the first period (SIFS; PIFS), whether the radio channel is occupied, and
to resend the first data (P1) over the radio channel after the expiry of a second period (PIFS; DIFS), which begins after the end of the previous sending of the first data (P1) and is longer than the first period (SIFS; PIFS), if the radio channel is not occupied after the expiry of the first period,
**characterized in that** the radio channel that is used is a dedicated radio channel reserved exclusively for the transmission of successive packets in a packet train, wherein the packet train comprises a number of data (P1; P2) that are not directly successive in terms of time, that originate from different terminals (NN1; NN2) and for which only the first of the participating terminals (NN1) performs a channel access procedure, wherein the first data (P1) and the retransmission thereof are part of the packet train.

2. First terminal (NN1) according to Claim 1, wherein the channel access procedure, prior to a channel access operation that comprises sending the first data (P1), checks whether the radio channel is free for the length of a monitoring period (DIFS), decrements a randomly selected backoff number for each time slot, recognized as being free, of the radio channel, and sends the first data for the first time when the backoff number reaches a threshold value of for example zero and the radio channel is free.

3. First terminal (NN1) according to either of the preceding claims, wherein the first period (SIFS; PIFS) is a short interframe space and the second period (PIFS; DIFS) is a PCF interframe space or a DCF interframe space.

4. First terminal (NN1) according to either of Claims 1 and 2, wherein the first period (SIFS; PIFS) is a point coordination function interframe space and the second period (PIFS; DIFS) is a DCF interframe space.

5. Method for operating a first vehicle-side terminal (NN1) of a radio network, wherein the method comprises:
determining first data (P1),
performing a channel access procedure for a radio channel,
sending the first data (P1) over the radio channel,
waiting for a first period (SIFS; PIFS) after the first data (P1) have finished being sent,
checking, after the expiry of the first period (SIFS; PIFS), whether the radio channel is occupied, and
resending the first data (P1) after the expiry of a second period (PIFS; DIFS), which begins after the end of the previous sending of the first data (P1) over the radio channel and is longer than the first period (SIFS; PIFS), if the radio channel is not occupied after the expiry of the first period,
**characterized in that** the radio channel that is used is a dedicated radio channel reserved exclusively for the transmission of successive packets in a packet train, wherein the packet train comprises a number of data (P1; P2) that are not directly successive in terms of time, that originate from different terminals (NN1; NN2) and for which only the first of the participating terminals (NN1) performs a channel access procedure, wherein the first data (P1) and the retransmission thereof are part of the packet train.

6. Second vehicle-side terminal (NN2) for radio communication in a radio network, wherein the second terminal (NN2) is designed to determine an identifier that identifies a first vehicle-side terminal (NN1) as a predecessor for sending second data (P2),
to receive first data (P1) over a radio channel from the first terminal (NN1) having the identifier,
to determine second data (P2),
to wait for a period (SIFS; PIFS) after the first data (P1) have finished being received, and
to send the second data (P2) over the radio channel without a channel access procedure when the period (SIFS; PIFS) has expired, wherein the first data (P1) and the second data (P2) form a packet train, wherein the first data (P1) and the second data (P2) comprise data (P1; P2) that are not directly successive in terms of time, that originate from different terminals (NN1; NN2) and for which only the first of the participating terminals (NN1) performs a channel access procedure.

7. Second terminal (NN2) according to Claim 6, wherein the second data (P2) are determined on the basis of the first data (P1).

8. Second terminal (NN2) according to Claim 6 or 7, wherein the period (SIFS; PIFS) is a short interframe space or a PCF interframe space.

9. Second terminal (NN2) according to one of Claims 6 to 8, wherein the second terminal (NN2) is designed
to wait for a further period (SIFS; PIFS) after the second data (P2) have finished being sent,
to check, after the expiry of the further period (SIFS; PIFS), whether the radio channel is occupied, and
to resend the second data (P2) over the radio channel after the expiry of an additional period (PIFS; DIFS), which begins after the end of the previous sending of the second data (P2) and is longer than the further period (SIFS; PIFS), if the radio channel is not occupied after the expiry of the additional period.

10. Method for operating a second vehicle-side terminal (NN2) of a radio network, wherein the method comprises:
determining an identifier that identifies a first vehicle-side terminal (NN1) as a predecessor for sending second data (P2),
receiving first data (P1) over a radio channel from the first terminal (NN1) having the identifier,
determining second data (P2),
waiting for a period (SIFS; PIFS) after the first data (P1) have finished being received, and
sending the second data (P2) over the radio channel without a channel access procedure when the period (SIFS; PIFS) has expired, wherein the first data (P1) and the second data (P2) form a packet train, wherein the first data (P1) and the second data (P2) comprise data that are not directly successive in terms of time, that originate from different terminals (NN1; NN2) and for which only the first of the participating terminals (NN1) performs a channel access procedure.

## Revendications

1. Premier terminal (NN1) côté véhicule pour la communication radio dans un réseau radio, le premier terminal (NN1) côté véhicule étant conçu pour
déterminer des premières données (P1),
exécuter une procédure d'accès au canal pour un canal radio,
envoyer les premières données (P1) par l'intermédiaire du canal radio,
attendre une première durée (SIFS ; PIFS) après la fin de l'envoi des premières données (P1),
vérifier, après écoulement de la première durée (SIFS ; PIFS), si le canal radio est occupé, et
envoyer à nouveau les premières données (P1) par l'intermédiaire du canal radio après écoulement d'une seconde durée (PIFS ; DIFS), qui commence après la fin de l'envoi effectué précédemment des premières données (P1) et qui est supérieure à la première durée (SIFS ; PIFS), lorsque le canal radio n'est pas occupé après écoulement de la première durée,
**caractérisé en ce que** le canal radio utilisé est un canal radio dédié, qui est réservé exclusivement à la transmission de paquets successifs selon un train de paquets, le train de paquets comprenant un nombre de données (P1 ; P2) qui ne se suivent pas immédiatement dans le temps et qui proviennent de différents terminaux (NN1 ; NN2), et pour lesquelles seul le premier des terminaux participants (NN1) exécute une procédure d'accès au canal, les premières données (P1) et leur transmission à nouveau faisant partie du train de paquets.

2. Premier terminal (NN1) selon la revendication 1, dans lequel la procédure d'accès au canal, avant un accès au canal qui comprend l'envoi des premières données (P1), vérifie si le canal radio est libre pendant une durée de surveillance (DIFS), décrémente un nombre de temporisation aléatoire pour chaque créneau temporel du canal radio reconnu comme libre, et envoie les premières données pour la première fois lorsque le nombre de temporisation atteint une valeur seuil, par exemple zéro, et que le canal radio est libre.

3. Premier terminal (NN1) selon l'une quelconque des revendications précédentes, dans lequel la première durée (SIFS ; PIFS) est un Espace Intertrame Court et la seconde durée (PIFS ; DIFS) est un Espace Intertrame PCF ou un Espace Intertrame DCF.

4. Premier terminal (NN1) selon l'une quelconque des revendications 1 ou 2, dans lequel la première durée (SIFS ; PIFS) est un Espace Intertrame à fonction de coordination de points et la seconde durée (PIFS ; DIFS) est un Espace Intertrame DCF.

5. Procédé de fonctionnement d'un premier terminal (NN1) côté véhicule d'un réseau radio, le procédé comprenant :
la détermination de premières données (P1),
l'exécution d'une procédure d'accès au canal pour un canal radio,
l'envoi des premières données (P1) par l'intermédiaire du canal radio,
l'attente d'une première durée (SIFS ; PIFS) après la fin de l'envoi des premières données (P1),
le fait de vérifier, après écoulement de la première durée (SIFS ; PIFS), si le canal radio est occupé, et
l'envoi à nouveau des premières données (P1) après écoulement d'une seconde durée (PIFS ; DIFS), qui commence après la fin de l'envoi effectué précédemment des premières données (P1) et qui est supérieure à la première durée (SIFS ; PIFS), lorsque le canal radio n'est pas occupé après écoulement de la première durée,
**caractérisé en ce que** le canal radio utilisé est un canal radio dédié, qui est réservé exclusivement à la transmission de paquets successifs selon un train de paquets, le train de paquets comprenant un nombre de données (P1 ; P2) qui ne se suivent pas immédiatement dans le temps et qui proviennent de différents terminaux (NN1 ; NN2), et pour lesquelles seul le premier des terminaux participants (NN1) exécute une procédure d'accès au canal, les premières données (P1) et leur transmission à nouveau faisant partie du train de paquets.

6. Second terminal (NN2) côté véhicule pour la communication radio dans un réseau radio, le second terminal (NN2) étant conçu pour
déterminer une identification qui identifie un premier terminal (NN1) côté véhicule comme prédécesseur pour un envoi de secondes données (P2),
recevoir des premières données (P1) par l'intermédiaire d'un canal radio en provenance du premier terminal (NN1) qui présente ladite identification,
déterminer des secondes données (P2),
attendre une première durée (SIFS ; PIFS) après la fin de la réception des premières données (P1), et
envoyer les secondes données (P2) sans procédure d'accès au canal par l'intermédiaire du canal radio lorsque la durée (SIFS ; PIFS) s'est écoulée, les premières données (P1) et les secondes données (P2) formant un train de paquets, les premières données (P1) et les secondes données (P2) comprenant des données (P1 ; P2) qui ne se suivent pas immédiatement dans le temps et qui proviennent de différents terminaux (NN1 ; NN2), et pour lesquelles seul le premier des terminaux participants (NN1) exécute une procédure d'accès au canal.

7. Second terminal (NN2) selon la revendication 6, dans lequel les secondes données (P2) sont déterminées en fonction des premières données (P1).

8. Second terminal (NN2) selon la revendication 6 ou 7, dans lequel la durée (SIFS ; PIFS) est un Espace Intertrame Court ou un Espace Intertrame PCF.

9. Second terminal (NN2) selon l'une quelconque des revendications 6 à 8, le second terminal (NN2) étant conçu pour
attendre une autre durée (SIFS ; PIFS) après la fin de l'envoi des secondes données (P2),
vérifier après écoulement de l'autre durée (SIFS ; PIFS) si le canal radio est occupé, et
envoyer à nouveau les secondes données (P2) par l'intermédiaire du canal radio après écoulement d'une durée supplémentaire (PIFS ; DIFS), qui commence après la fin de l'envoi précédent des secondes données (P2) et qui est supérieure à l'autre durée (SIFS ; PIFS), lorsque le canal radio n'est pas occupé après écoulement de la durée supplémentaire.

10. Procédé de fonctionnement d'un second terminal (NN2) côté véhicule d'un réseau radio, le procédé comprenant :
la détermination d'une identification qui identifie un premier terminal (NN1) côté véhicule comme prédécesseur pour un envoi de secondes données (P2),
la réception de premières données (P1) par l'intermédiaire d'un canal radio en provenance du premier terminal (NN1) qui présente ladite identification,
la détermination de secondes données (P2),
l'attente d'une durée (SIFS ; PIFS) après la fin de la réception des premières données (P1), et
l'envoi des secondes données (P2) par l'intermédiaire du canal radio sans procédure d'accès au canal lorsque la durée (SIFS ; PIFS) s'est écoulée, les premières données (P1) et les secondes données (P2) formant un train de paquets, les premières données (P1) et les secondes données (P2) comprenant des données qui ne se suivent pas immédiatement dans le temps et qui proviennent de différents terminaux (NN1 ; NN2), et pour lesquelles seul le premier des terminaux participants (NN1) exécute une procédure d'accès au canal.
